(19) Europäisches Patentamt

European Patent Office

Office européen des brevets

(11) EP 0 964 285 A1

(12) EUROPEAN PATENT APPLICATION

(43) Date of publication:
15.12.1999 Bulletin 1999/50

(51) Int. Cl.$^6$: G02C 7/02

(21) Application number: 99111333.3

(22) Date of filing: 10.06.1999

(84) Designated Contracting States:
AT BE CH CY DE DK ES FI FR GB GR IE IT LI LU MC NL PT SE
Designated Extension States:
AL LT LV MK RO SI

(30) Priority: 10.06.1998 JP 17808498
10.06.1998 JP 17808598
11.05.1999 JP 13005499
11.05.1999 JP 13005399

(71) Applicant: NIKON CORPORATION
Tokyo (JP)

(72) Inventor:
Ueno,Yasunori,
c/o Nikon Corp.(Intel. Prop. HQ.)
Chiyoda-ku, Tokyo (JP)

(74) Representative:
Viering, Jentschura & Partner
Postfach 22 14 43
80504 München (DE)

(54) Aspheric ophthalmic lens

(57) A positive ophthalmic lens (50) and a negative ophthalmic lens (110) each having superior optical performance, a thin lens center thickness, a thin lens edge thickness, and a good external appearance. Each type of lens has an optical center and a meridional line, and comprises an objectwise first aspherical surface (54 or 114) with a first meridional curvature and a first sagittal curvature, an eyewise second aspheric surface (56 or 116) with a second meridional curvature and a second sagittal curvature. The first and second meridional curvatures are given as $\rho$m, the first and second sagittal curvatures are given as $\rho$s, and a curvature differential between curvature $\rho$m and curvature $\rho$s is the curve differential Z = $\rho$m - $\rho$s. For the positive ophthalmic lens, Z monotonically decreases in a range from the optical center to a distance of at least 20 mm along the meridional line. For the negative ophthalmic lens, Z monotonically increases in a range from the optical center to a distance of at least 20 mm along the meridional line.

FIG. 6a

EP 0 964 285 A1

## Description

### Field of the Invention

The present invention relates to an aspherical ophthalmic lens, and more particularly relates to a positive ophthalmic lens for correcting of hypermetropia and a negative ophthalmic lens for correcting myopia, both lenses having aspherical front and back lens surfaces.

### Background of the invention

In ophthalmic lenses used to correct refractive errors of the eye, a spherical surface is conventionally employed in the "first" or front surface (i.e., the objectwise refractive surface when worn) to simplify fabrication. On the other hand, toric surfaces as well as spherical surfaces are employed on the "second" or back surface (i.e., the refractive surface closest to the eye, or the "eyewise" surface when worn) to correct astigmatism and the like. A toric surface is specified by a first longitude having a maximum radius of curvature, and a second longitude orthogonal to the first longitude and having a minimum radius of curvature. Furthermore, the radii of curvature of both of the two longitudes that specify the toric surface are fixed circular curves. An ophthalmic lens wherein the first surface is formed in a spherical surface shape and the second surface is formed in a spherical surface shape or a toric surface shape shall hereinafter be called a "spherical lens."

The refractive power of an ophthalmic lens is generally expressed in a unit called the diopter (hereinafter denoted by "D"). In addition, the refractive power of the surface of the ophthalmic lens, namely surface refractive power $\varphi$, is defined by the following expression (1), wherein $\rho$ (unit: m$^{-1}$) is the surface curvature and n is the refractive index of the optical material forming the ophthalmic lens:

$$\varphi = (n - 1) \times \rho = (n - 1)/R , \tag{1}$$

wherein R (unit: m) is the radius of curvature of the surface (= $1/\rho$).

The refractive power of the first surface of an ophthalmic lens is called the base curve.

Hereinafter, the curvature corresponding to the base curve is referred to as the base curve curvature.

The power of an ophthalmic lens is specified principally by the refractive power of the first surface and the refractive power of the second surface. Consequently, the base curve required to obtain an ophthalmic lens having a predetermined power can assume various values depending upon the selective combination of the refractive power of the first surface and the refractive power of the second surface. Nevertheless, in actual design, the value of the base curve is limited to a specified range in accordance with the power of the ophthalmic lens to ensure the required optical performance of the ophthalmic lens and. Such limitation is also needed to minimize astigmatism that acts upon the eye when viewing through a lateral part of the lens remote from the optical axis.

The generally known solution for minimizing astigmatism in an ophthalmic lens is the so-called Tscherning's ellipse, which is a thin-lens solution. However, since the center of an actual ophthalmic lens has thickness, the actual solution as determined by ray tracing differs slightly from Tscherning's ellipse. Nevertheless, the actual solution for an ophthalmic lens does not appear to deviate significantly from Tscherning's ellipse.

An ophthalmic lens having positive power and used principally to correct hypermetropia and presbyopia has several drawbacks. One drawback is that the thickness at the center of the ophthalmic lens increases as the power of the ophthalmic lens strengthens. Another drawback is that the protrusion of the convex surface at the center increases as the curvature increases.

As discussed above, the base curve is properly defined from the standpoint of optical performance, which decreases dramatically if the base curve departs greatly from the curve derived from Tscherning's ellipse. In other words, the selection of the base curve largely controls optical performance.

Japanese Patent Application Kokai No. Sho 52-136644, Japanese Patent Application Kokoku No. Sho 60-15248 (corresponding to U.S. Patent No. 4,181,409) and Japanese Patent Application Kokai No. Sho 58-24112 (corresponding to U.S. Patent No. 4,504,128), for example, propose ophthalmic lenses having positive power for correcting hypermetropia and that improve the external appearance in this type of ophthalmic lens. The lenses disclosed therein have an aspherical first surface.

The ophthalmic lens disclosed in Japanese Patent Application Kokai No. Sho 52-136644 has a quadratic curve, such as an ellipse, parabola or hyperbola, as the meridional line. The first surface is aspherical and is specified by rotating this meridional line. In addition, the ophthalmic lens disclosed in Japanese Patent Application Kokoku No. Sho 60-15248 has a strong positive power for aphakia. The first surface is formed in a rotational aspherical surface shape based on the curve of a tenth order function of the radius r. Furthermore, the ophthalmic lens disclosed in Japanese Patent Application Kokai No. Sho 58-24112 also has a strong positive power for aphakia. A correction term is added to the basic quadratic curve and the first surface is formed in a rotational aspherical surface shape based on that curve.

The point common to the conventional positive ophthalmic lenses discussed above is that the curvature of the meridional line decreases nearly monotonically and acceleratedly outwardly from the rotational axis (generally the geometric center of the lens) toward the peripheral edge of the lens. As a result, there is the drawback that the lens power at the peripheral part drops significantly as compared to the center part. Thus, the effective range of the visual field prescribed for the eye of the wearer narrows. In ophthalmic lenses for aphakia, an aspherical surface having strong changes in curvature is employed to achieve thinness (flatness) of the lens. However, the range of the effective field of vision has a relatively small diameter of approximately 30 mm to at most 40 mm on the lens.

In addition, the conventional ophthalmic lenses discussed above do not sufficiently take into consideration patients who require a prescription for astigmatism. To configure the conventional ophthalmic lenses discussed above, and to correct for astigmatism, the second surface is normally toric. In this case, even if the optical performance in one of the longitudinal directions that specifies the toric surface is satisfied by the aspherization of the first surface, optical performance in the other longitudinal direction cannot be satisfied.

Similarly, in an ophthalmic lens having negative power used principally to correct myopia there is the problem that the edge thickness (i.e., thickness at the peripheral edge of the lens) increases as the power of the ophthalmic lens strengthens.

Various types of negative ophthalmic lenses for correcting myopia having improved optical performance and an improved external appearance have been proposed wherein one of the lens surfaces is aspherical. For example, Japanese Patent Application Kokai No. Sho 53-94947 and Japanese Patent Application Kokoku No. Sho 59-41164 (corresponding to U.S. Patent No. 4,279,480) propose ophthalmic lenses wherein the first surface is aspherical.

The ophthalmic lens disclosed in Japanese Patent Application Kokai No. Sho 53-94947 is divided into a center portion of the first surface and a peripheral portion outside thereof. Furthermore, the center portion comprises a single spherical surface, and the outer peripheral portion comprises a torus having a curvature larger than the curvature of the spherical surface of the center portion thereof. In this case, there is a large spherical portion in the center part. Accordingly, the curvature of the torus of the outer peripheral portion with respect to the curvature of the spherical surface of the center portion cannot be changed dramatically to avoid suffering large losses in optical performance in the outer peripheral portion. As a result, the lens still has a large lens edge thickness and thus cannot be made sufficiently thin (i.e., flat).

On the other hand, in the ophthalmic lens disclosed in Japanese Patent Application Kokoku No. Sho 59-41164, the first surface is aspherical as specified by a special function. In this case, the first surface with respect to a spherical surface having the vertex curvature of the first surface of the ophthalmic lens first protrudes objectwise toward the peripheral edge along the meridional line from the optical center thereof, and then falls back eyewise. The problem with this ophthalmic lens lies in the unique aspherical surface shape of the first surface. The lens has an undesirable external appearance since remarkably uneven reflections occur in the undulating first surface.

**Summary of the Invention**

The present invention relates to an aspherical ophthalmic lens, and more particularly relates to a positive ophthalmic lens for correcting of hypermetropia and a negative ophthalmic lens for correcting myopia, both lenses having aspherical front and back lens surfaces.

A first aspect of the invention is a positive ophthalmic lens having superior optical performance, a thin lens center thickness, and a good external appearance. The lens has an optical center and a meridional line, and comprises an objectwise first aspherical surface with a first meridional curvature and a first sagittal curvature, and an eyewise second aspherical surface with a second meridional curvature and a second sagittal curvature. The first and second meridional curvatures are given as $\rho m$, the first and second sagittal curvatures are given as $\rho s$, and a curvature differential Z between curvature $\rho m$ and curvature $\rho s$ given by $Z = \rho m - \rho s$. The value of Z monotonically decreases in a range from the optical center to a distance of at least 20 mm along the meridional line.

A second aspect of the invention is a negative ophthalmic lens similar to the positive ophthalmic lens described above, except that the value of Z monotonically increases in a range from the optical center to a distance of at least 20 mm along the meridional line.

A third and a fourth aspect of the invention is a positive or negative ophthalmic lens as described above, wherein curvature differential Z for the objectwise first aspherical surface and said eyewise second aspherical surface satisfies the following condition:

$$(n-1) \times h \times \rho o < |Z| < (n-1) \times h \times \rho o \times 1000$$

wherein $\rho o$ is a surface curvature at the optical center in units of inverse meters, n is a refractive index of an optical material forming the ophthalmic lens, and h is a distance in units of meters along the meridional line extending outwardly from the optical center.

**Brief Description of the Drawings**

FIG. 1a is a plan view of an ophthalmic lens according to a prior art Comparative Example 1;

FIGS. 1b-1c are cross-sectional,views of the lens of FIG. 1a taken along the V-direction (FIG. 1b) and the H-direction (FIG. 1c);

FIGS. 2a and 2b are astigmatism plots in the worn state of the ophthalmic lens according to Comparative Example 1, wherein FIG. 2a is the astigmatism in the H-direction and FIG. 2b is the astigmatism in the V-direction;

FIG. 3a is a plan view of an ophthalmic lens according to a prior art Comparative Example 2;

FIGS. 3b-3c are cross-sectional views of the lens of FIG. 3a taken along the V-direction (FIG. 3b) and the H-direction (FIG. 3c);

FIG. 4 is a plot showing the change in the difference between curvature $\rho m$ (unit: $m^{-1}$) in the meridional direction and curvature $\rho s$ (unit: $m^{-1}$) in the sagittal direction, namely the change in curvature differential $Z = \rho m - \rho s$, of the first aspherical surface of the opthalmic lens according to Comparative Example 2 of FIG 3a;

FIGS. 5a and 5b are astigmatism plots in the worn state of the ophthalmic lens according to Comparative Example 2, wherein FIG. 5a is the astigmatism in the H-direction and FIG. 5b is the astigmatism in the V-direction;

FIG. 6a is a plan view of the ophthalmic lens according to a Working Example 1 of the present invention;

FIGS. 6b-6c are cross-sectional views of the lens of FIG. 6a taken along the V-direction (FIG. 6b) and the H-direction (FIG. 6c);

FIG. 7 is a plot showing the change in the difference between curvature $\rho m$ (unit: $m^{-1}$) in the meridional direction and curvature $\rho s$ (unit: $m^{-1}$) in the sagittal direction, namely the change in curvature differential $Z = \rho m - \rho s$, of the second longitude of the second surface of the ophthalmic lens according to Working Example 1 of FIG. 6a;

FIGS. 8a and 8b are astigmatism plots in the worn state of the ophthalmic lens according to Working Example 1, wherein FIG. 8a is the astigmatism in the H-direction and FIG. 8b is the astigmatism in the V-direction;

FIG. 9a is a plan view of an ophthalmic lens according to a prior art Comparative Example 3;

FIGS. 9b-9c are cross-sectional views of the lens of FIG. 9a taken along the V-direction (FIG. 9b) and the H-direction (FIG. 9c);

FIGS. 10a and 10b are astigmatism plots in the worn state of the ophthalmic lens according to Comparative Example 3, wherein FIG. 10a is the astigmatism in the H-direction and FIG. 10b is the astigmatism in the V-direction;

FIG. 11a is a plan view of an ophthalmic lens according to a prior art Comparative Example 4;

FIGS. 11b-11c are cross-sectional views of the lens of FIG. 11a taken along the V-direction (FIG. 11b) and the H-direction (FIG. 11c);

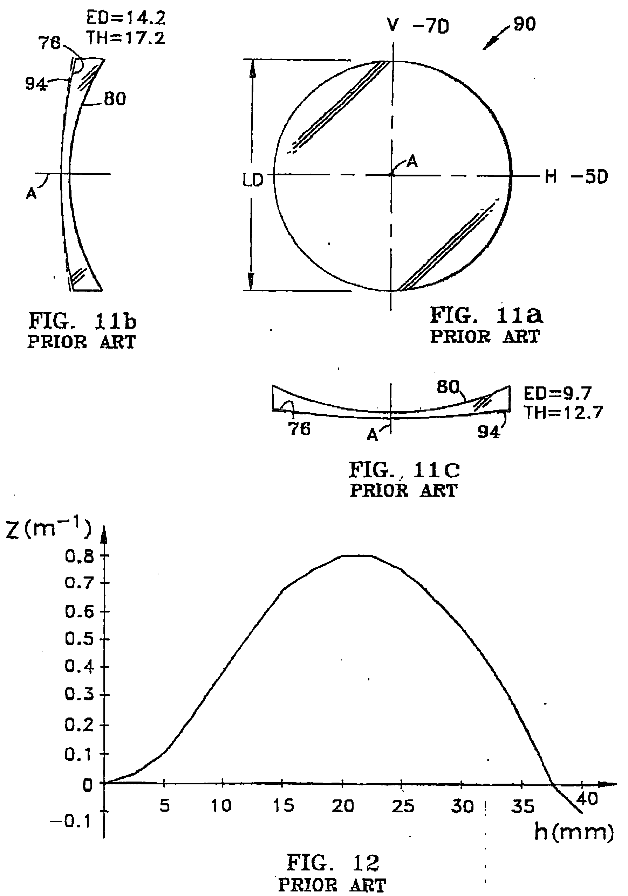

FIG. 12 is a plot showing the change in the difference between curvature $\rho m$ (unit: $m^{-1}$) in the meridional direction

and curvature $\rho s$ (unit: $m^{-1}$) in the sagittal direction, namely the change in curvature differential $Z = \rho m - \rho s$, of the first aspherical surface of the ophthalmic lens according to Comparative Example 4 of FIG 11a;

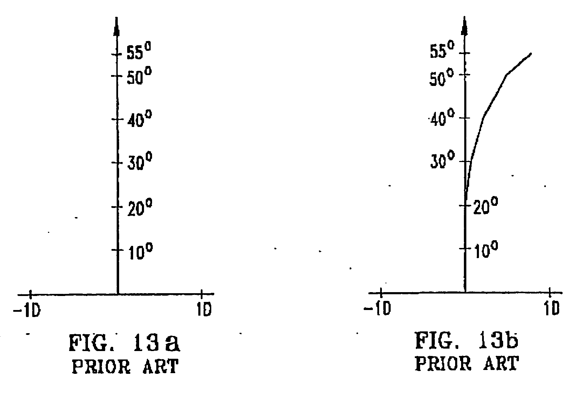

FIGS. 13a and 13b are astigmatism plots in the worn state of the ophthalmic lens according to Comparative Example 4, wherein FIG. 13a is the astigmatism in the H-direction and FIG. 13b is the astigmatism in the V-direction;

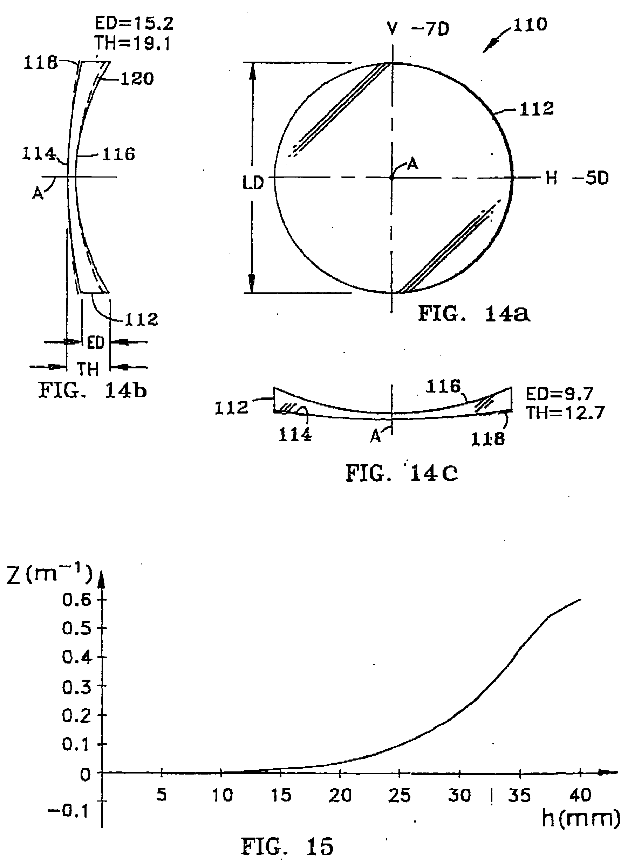

FIG. 14a is a plan view of the ophthalmic lens according to a Working Example 2 of the present invention;

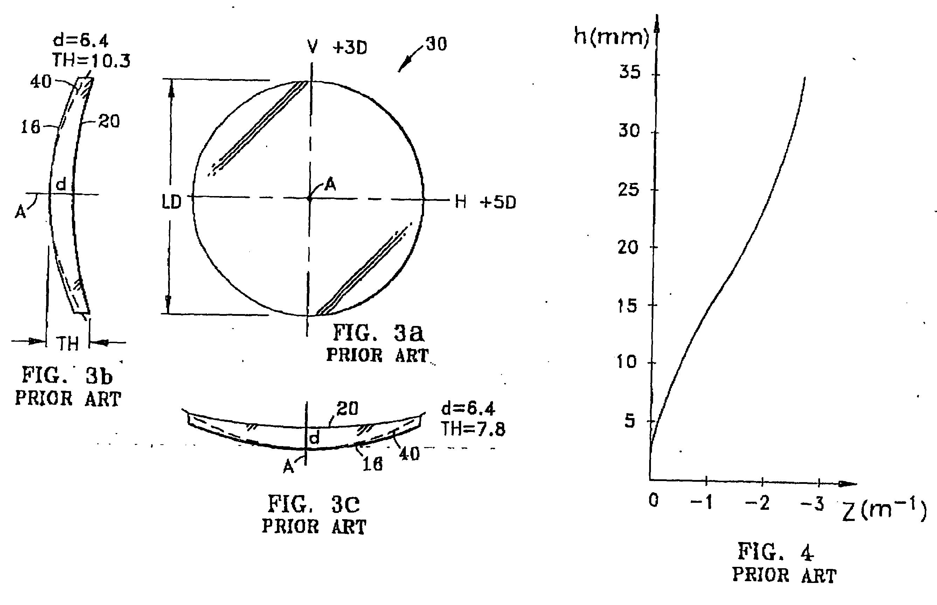

FIGS. 14b-14c axe cross-sectional views of the lens of FIG. 14a taken along the V-direction (FIG. 3b) and the H-direction (FIG. 3c);

FIG. 15 is a plot showing the change in the difference between curvature $\rho m$ (unit: $m^{-1}$) in the meridional direction and curvature $\rho s$ (unit: $m^{-1}$) in the sagittal direction, namely the change in curvature differential $Z = \rho m - \rho s$, of the second longitude of the second surface of the ophthalmic lens according to Working Example 2 of FIG. 14a; and

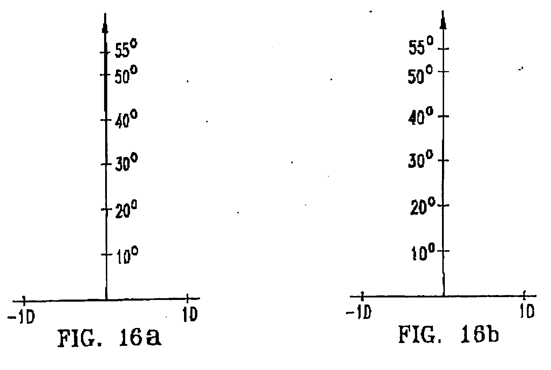

FIGS. 16a and 16b are astigmatism plots in the worn state of the ophthalmic lens according to Working Example 2, wherein FIG. 16a is the astigmatism in the H-direction and FIG. 16b is the astigmatism in the V-direction.

## Detailed Description of the Invention

The present invention relates to an aspherical ophthalmic lens, and more particularly relates to a positive ophthalmic lens for correcting of hypermetropia and a negative ophthalmic lens for correcting myopia, bath lenses having aspherical front and back lens surfaces.

The, present invention takes the aforementioned problems associated with conventional ophthalmic lenses into consideration, and has the goal of providing an ophthalmic lens having superior optical performance and an aesthetically pleasing appearance. In the case of the positive lens of the present invention, the lens has a thin center thickness. In the case of the negative lens of the present invention, the lens has a thin edge thickness.

As discussed above in the Background of the Invention, the optimal base curve in a spherical lens is generally close to the curve derived from Tscherning's ellipse. In an ophthalmic lens that employs this optimal base curve, sufficiently satisfactory optical performance is obtained as long as a prescription for astigmatism is not required. Nevertheless, as the power of a positive ophthalmic lens increases, the center thickness thereof increases and the protrusion of the convex surface at the center increases as the curvature increases. This leads to a poor external appearance of the lens, Likewise, as the power of a negative ophthalmic increases, the edge thickness increases and the projection of the lens peripheral edge increases, since the curvature of the second surface increases. This, too, leads to a poor external appearance of the lens.

Problems in the external appearance of spherical lenses are solved to some extent in conventional aspherical lenses by weakening the base curve of the first surface and by aspherization. However, satisfactory optical performance still cannot be provided for patients that require a prescription for astigmatism. In other words, as long as a conventional toric surface shape is used for the second surface, even if optical performance in one longitudinal direction is satisfied by aspherization of the first surface, optical performance in the other longitudinal direction cannot be satisfied.

The optimal base curve from the viewpoint of optical performance for a predetermined lens power is uniquely determined. Nevertheless, if this optimal base curve is employed in an ophthalmic lens having positive power, the center thickness of the lens increases, the weight of the lens increases, and the projection of the convex surface at the center of the lens increases. These effects all serve to degrade the external appearance of the lens. To improve the external appearance of the lens caused by the above effects, a base curve weaker (lower) than the optically optimal base curve must be employed. Nevertheless, employing such a base curve sacrifices optical performance, as discussed above. Accordingly, it is preferable to improve the external appearance of the lens while ensuring superior optical performance by employing a base curve weaker than the optically optimal base curve while introducing an aspherical surface.

It is necessary in an ophthalmic lens that astigmatism is satisfactorily controlled. If a base curve weaker than the optically optimal base curve is employed, astigmatism increases. Consequently, it is preferable to introduce an aspherical surface so that astigmatism is minimized. In other words, an aspherical surface that is different from the curvature in the meridional direction and the curvature in the sagittal direction is preferably introduced. In this case, the curvature differential between the curvature in the meridional direction and the curvature in the sagittal direction varies in accordance with the astigmatism generated by the employment of a weak base curve and in accordance with the distance from the optical center of the lens. In other words, the value of and the change in curvature differential $Z = \rho m - \rho s$ between curvature $\rho m$ in the meridional direction and curvature $\rho s$ in the sagittal direction along the meridional line from the optical center of the first surface (objectwise refractive surface) and the second surface (eyewise refractive surface) becomes critical.

In the present invention, the sagittal curvature indicates the curvature in the direction of the line of intersection between the lens surface and the plane orthogonal to the meridional line. In this case, if the lens surface is spherical for example, the curvature in the meridional direction and the curvature in the sagittal direction are the same.

Accordingly, to weaken the base curve of the first surface of the positive ophthalmic lens of the present invention while correcting astigmatism generated by the weakening of the base curve, one aspect of the present invention employs an aspherical surface shape specified by the value of curvature differential Z with respect the first surface, and aspherizes the refractive surface along at least one of the two longitudes that specify the toric surface of the second surface, particularly in the case wherein a prescription for astigmatism is required. As a result, a positive ophthalmic lens for correcting hypermetropia is realized having superior optical performance, a thin center thickness, and a good appearance.

Likewise, if the optimal base curve from the viewpoint of optical performance determined in this manner is employed in an ophthalmic lens having negative power, the edge thickness of the lens increases and the projection of the lens peripheral part increases. These effects all serve to degrade the external appearance of the lens. To improve the external appearance of the lens caused by these effects, a base curve weaker (lower) than the optically optimal base curve must be employed. Nevertheless, employing such a base curve sacrifices optical performance, as discussed above. Accordingly, it is preferable to improve the external appearance while ensuring superior optical performance in a negative ophthalmic lens by employing a base curve weaker than the optically optimal base curve while introducing an aspherical surface.

Accordingly, to weaken the base curve of the first surface of the negative ophthalmic lens of the present invention while correcting astigmatism generated by the weakening of the base curve, another aspect of the present invention employs an aspherical surface specified by the value of curvature differential Z, as mentioned above, with respect to the first surface, and aspherizes the refractive surface along at least one of the two longitudes that specify the toric surface of the second surface, particularly in the case wherein a prescription for astigmatism is required. As a result, a negative ophthalmic lens for correcting myopia is realized having superior optical performance, a thin edge thickness, and a good appearance.

### Comparative Examples and Working Examples

The following explains prior art Comparative Examples and Working Examples according to the present invention, based on the attached drawings. Comparative Examples are provided to facilitate the discussion of first and second Working Examples of the present invention. First set forth are Comparative Examples 1-2 and Working Example 1 pertaining to the positive ophthalmic lens of the present invention. Then set forth are Comparative Examples 3-4 and Working Example 2 pertaining to the negative ophthalmic lens of the present invention.

### Comparative Example 1

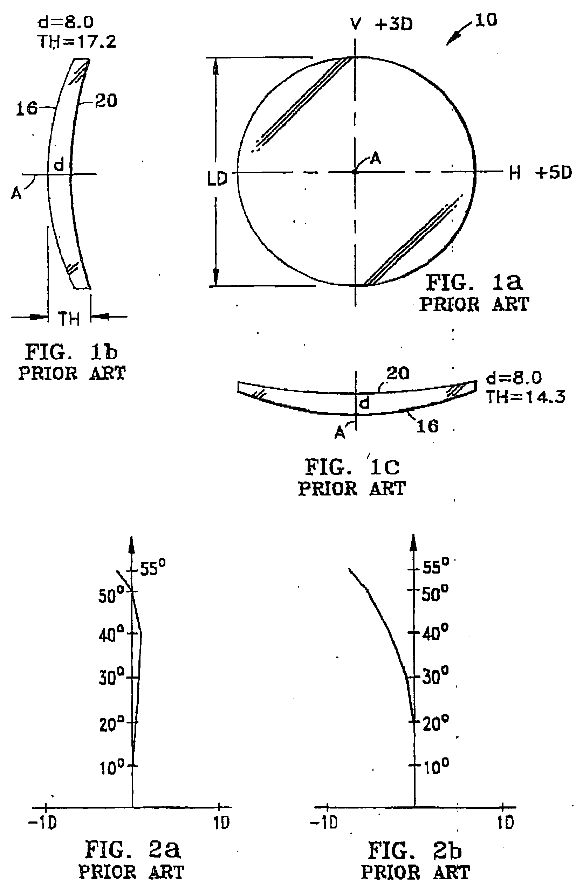

With reference now to FIGS. 1a-1c, opthalmic lens 10 is a first Comparative Example and comprises a first surface (i.e, a front or objectwise refractive surface) 16 that is spherical, and a second surface (i.e., a back or eyewise refractive surface) 20 that is toric. Surfaces 16 and 20 are arranged along optical axis A. In the present invention, the optical axis indicates the optical center of the lens. Lens 10 has a spherical power of +5.0D, a base curve of 9.5D and an astigmatism power of -2D, and implements the prior art in a design at infinity. The refractive power in the H-direction, namely the first longitudinal direction (which is the horizontal direction in FIG. 1a) is +5D. The refractive power in the V-direction, namely the second longitudinal direction (which is the vertical direction in FIG.1a), is +3D.

The radius of curvature of surface 16 is 52.631 mm (corresponding to a base curve of 9.5D). The radius of curvature of the first longitude of second surface 20 is 99.879 mm, and the radius of curvature of the second longitude of second surface 20 is 71.429 mm. In addition, the lens diameter LD is 70 mm, and the refractive index of the lens is 1.50. The lens center thickness d in the H-direction is 8.0 mm, and the total height TH in the H-direction is 14.3 mm. The lens center thickness d in the V-direction is 8.0 mm, and the total height TH in the V-direction is 17.2 mm. Furthermore, the edge thickness of lens 10 in the H-direction is 1.0 mm, and the edge thickness of the lens in the V-direction is 3.8 mm.

In FIGS. 2a-2b, and the ensuing astigmatism plots of FIGS. 4a-4b, 7a-7b, 10a-10b, 12a-12b, and 15a-15b, the vertical axis represents the angle of the field of vision (unit: °), and the horizontal axis represents the astigmatism (unit: D, the difference between the meridional image plane and the sagittal image plane) based on the on-axis refractive power of the lens.

With reference now to FIGS. 2a and 2b, the astigmatism in the H-direction (FIG. 2a) is comparatively satisfactorily corrected, while the astigmatism in the V-direction (FIG. 2b) precipitously increases as the angle of the field of vision increases. Thus, although the curve in the H-direction is comparatively close to the optimal curve, the curve in the V-direction deviates greatly from the optimal curve. This trend increases as the astigmatism power increases.

As described above, as the power of lens 10 increases, the lens center thickness d increases, the curvature strengthens, and the protrusion of the convex surface at the center of the lens increases. Consequently, the external appearance of the lens degrades.

In addition, the optical performance of lens 10 along one longitudinal direction (H-direction) is satisfactory to some extent. However, the optical performance along the other longitudinal direction (V-direction) deteriorates as the angle of the field of vision increases. Moreover, since optical performance along each longitudinal direction decreases remarkably as the astigmatism power increases, patents requiring a prescription for astigmatism are not sufficiently taken into consideration.

**Comparative Example 2**

With reference now to FIGS. 3a-3c, ophthalmic lens 30 is a second Comparative Example comprising a spherical power of +5.0D, a base curve of 6.0D and an astigmatism power of -2D, and implements the prior art in a design at infinity. Lens 30 is the same as lens 10 (FIG. 1a), except that the former includes an arc 40 having a curvature corresponding to the base curve.. First surface 16 is aspherical surface. Furthermore, as in lens 10, the refractive power of lens 30 in the H-direction is +5D, and the refractive power in the V-direction is +3D.

The radius of curvature at first surface 16 is 83.333 mm (corresponding to a base curve of 6.0D). The radius of curvature of the first longitude of second surface 20 is 432.198 mm. The radius of curvature of the second longitude of second surface 20 is 158.384 mm. In addition, the lens diameter LD is 70 mm, and the refractive index of the lens is 1.50. The lens center thickness d in the H-direction is 6.4 mm, and the total height TH in the H-direction is 7.8 mm. The lens center thickness d in the V-direction is 6.4 mm, and the total height TH in l the V-direction is 10.3 mm. Furthermore, the edge thickness of the lens in the H-direction is 1.0 mm, and the edge thickness of the lens in the V-direction is 3.5 mm.

FIG. 4 shows the change in the difference between the curvature, $\rho m$ (unit: $m^{-1}$) in the meridional direction and the curvature $\rho s$ (unit: $m^{-1}$) in the sagittal direction, namely the change in curvature differential $Z = \rho m - \rho s$, of the aspherical surface of first surface 16 of ophthalmic lens 30. In FIG. 4, the horizontal axis is the value of curvature differential Z (unit: $m^{-1}$) and the vertical axis is the distance h (unit: mm) from optical axis A along the meridional line.

Table 1 below sets forth the data corresponding to FIG. 4. The precise values of curvature differential Z are shown corresponding to specific values of curvature $\rho m$ in the meridional direction, curvature $\rho s$ in the sagittal direction, and distance h. Referring to FIG. 4 and Table 2, the value of curvature differential Z decreases gradually along the meridional line from optical axis A, and the rate of decrease drops at a distance of approximately 20 - 25 mm from the optical axis.

TABLE 1

| Curvature Differential Z Values for Comparative Example 2 | | | |
|---|---|---|---|
| h | $\rho m$ | $\rho s$ | Z |
| 0.0 | 12.000 | 12.000 | 0.000 |
| 5.0 | 11.783 | 11.927 | -0.144 |
| 10.0 | 11.180 | 11.718 | -0.539 |
| 15.0 | 10.314 | 11.400 | -1.086 |
| 20.0 | 9.348 | 11.008 | -1.660 |
| 25.0 | 8.435 | 10.583 | -2.148 |
| 30.0 | 7.671 | 10.159 | -2.487 |
| 35.0 | 7.082 | 9.759 | -2.677 |

First surface 16 of lens 30 has a vertex curvature corresponding to the base curve in the vicinity of optical axis A. However, the curvature toward the peripheral edge of lens 30 from optical axis A along the meridional line decreases (i.e., the radius of curvature increases). As a result, first surface 16 protrudes frontward (objectwise) from arc 40. Nevertheless, in lens 30, the base curve of first surface 16 is weakened (lowered) more than in lens 10 (FIG. 1) and is aspherized. Thus, the lens center thickness and total height in the H-direction and V-direction are greatly decreased as compared to that of lens 10, thus improving the external appearance of the lens. Further, a lightweight lens 30 is realized.

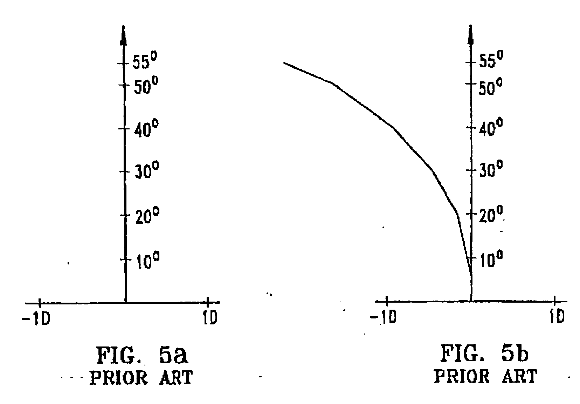

Referring now to FIGS. 5a and 5b, though astigmatism in the H-direction (FIG. 5a) is nearly completely corrected, astigmatism in the V direction (FIG. 4b) precipitously increases as the angle of the field of vision increases. Thus, although the curve in the H-direction is substantially the optimal curve, the curve in the V-direction deviates greatly from the optimal curve. This trend in astigmatism increases as the astigmatism power increases.

In ophthalmic lens 30 as described above the lens center thickness d is thinner and the projection of the convex surface at the center of the lens is also reduced as compared with lens 10. In other words, by weakening the base curve and aspherizing first surface 40, the external appearance of the lens is improved and a thinner lens is realized.

Since second surface 20 of lens 30 employs a conventional toric surface, the optical performance along one longitudinal direction (the H-direction) is extremely satisfactoxy. However, the optical performance along the other longitudinal direction (the V-direction) deteriorates as the angle of the field of vision increases. Moreover, as the astigmatism power increases, the optical performance along the V-direction decreases remarkably In other words, lens 30 has the disadvantage in that patients requiring a prescription for astigmatism are still not taken sufficiently into consideration.

**Working Example 1**

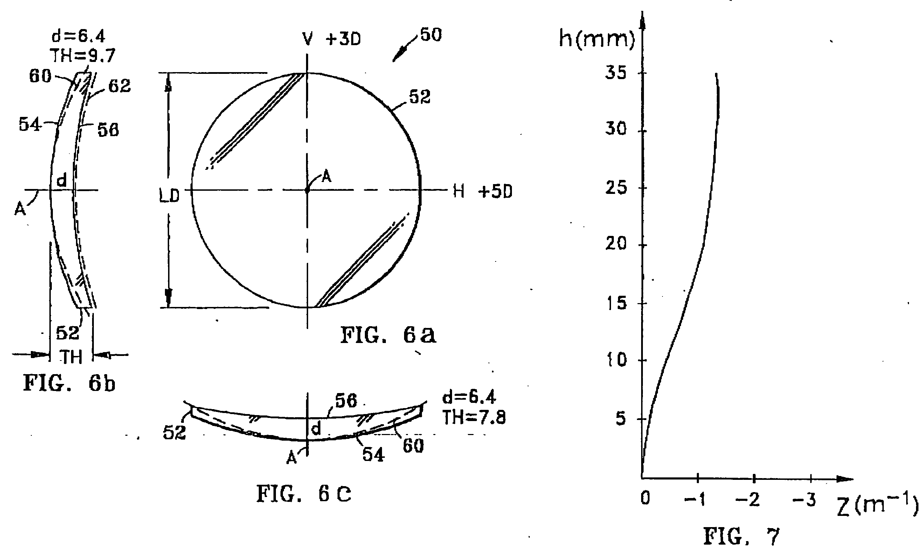

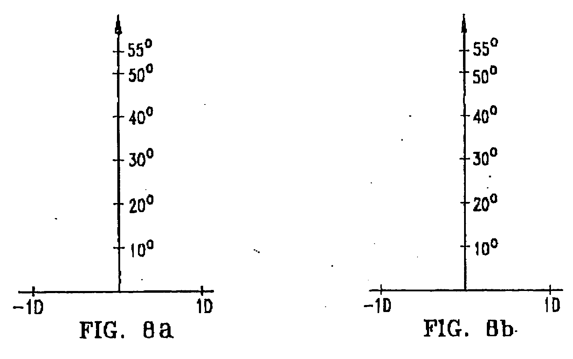

With reference now to FIGS. 6a-6c, ophthalmic lens 50 represents a first Working Example (i.e., Working Example 1) of the present invention, and comprises a peripheral edge 52, first surface 54 and a second surface 56. First surface 54 is aspherical with the base curve made lower than in lens 10 (FIG. 1a), the same as in lens 30 (FIG. 3a). First surface 54 is the same configuration as first surface 16 in lens 30. (Comparative Example 2). Nevertheless, unlike lenses 10 and 30, in lens 50, second surface 56 is toric, aspherized along the second longitudinal direction (i.e., the vertical direction in FIG. 6a).

Lens 50 of the present Working Example has a spherical power of +5.0D, a base curve of 6.0D and an astigmatism power of -2D, and implements the present invention for a design at infinity. Lens 50 also includes an arc 60 having a curvature corresponding to the base curve, and an arc 62 having the vertex curvature of the second longitude of the second surface (on-axis curvature). Furthermore, as in lenses 10 and 30, the refractive power in the H-direction is +5D, and the refractive power in the V-direction is +3D.

The radius of curvature of first surface 54 is 83.333 mm (corresponding to a base curve of 6.0D). The radius of curvature of the first longitude of second surface 56 is 432.198 mm. The radius of curvature of the second longitude of second surface 56 is 158.384 mm. The lens diameter LD is 70 mm, and the refractive index of the lens is 1.50. The lens center thickness d in the H-direction is 6.4 mm, and the total height TH in the H-direction is 7.8 mm. The lens center thickness d in the V-direction is 6.4 mm, and the total height TH in the V-direction is 9.7 mm. Furthermore, the edge thickness of lens 50 in the H-direction at edge 52 is 1.0 mm, and the edge thickness of the lens in the V-direction at edge 52 is 3.0 mm.

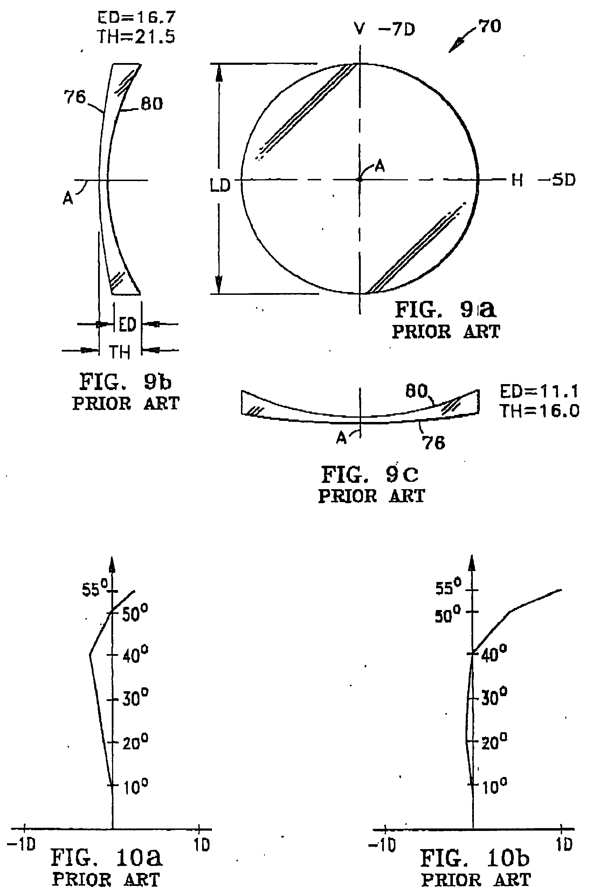

Table 2 below sets forth the data corresponding to FIG. 7, wherein the precise values of curvature differential Z of the aspherical surface of the second longitude of the second surface 56 are shown corresponding to specific values of curvature $\rho m$ in the meridional direction, curvature $\rho s$ in the sagittal direction, and distance h. Referring to FIG. 7 and Table 2, the value of curvature differential Z decreases gradually along the meridional line from optical axis A, and the rate of decrease drops at a distance of approximately 20 - 25 mm from optical axis A. Subsequently, Z decreases monotonically and then increases as it approaches the peripheral edge along the meridional line from optical axis A. To maintain sufficient optical performance across the entire angle of the field of vision while avoiding an undesirable external appearance, it can be seen that the value of curvature differential Z between curvature $\rho m$ in the meridional direction and curvature $\rho s$ in the sagittal direction must decrease monotonically at least in the range of the distance up to 20 mm along the meridional line from the optical center of the lens.

TABLE 2

| Curvature Differential Z Values for Working Example 1 | | | |
|---|---|---|---|
| h | $\rho m$ | $\rho s$ | Z |
| 0.0 | 6.314 | 6.314 | 0.000 |
| 5.0 | 6.120 | 6.248 | -0.128 |
| 10.0 | 5.626 | 6.070 | -0.443 |

TABLE 2 (continued)

| Curvature Differential Z Values for Working Example 1 | | | |
|---|---|---|---|
| h | ρm | ρs | Z |
| 15.0 | 5.019 | 5.821 | -0.802 |
| 20.0 | 4.461 | 5.555 | -1.094 |
| 25.0 | 4.023 | 5.285 | -1.262 |
| 30.0 | 3.704 | 5.047 | -1.343 |
| 35.0 | 3.503 | 4.839 | -1.336 |

The aspherical surface shape of first surface 54 of lens 50 of the present Working Example is specified by curvature differential Z shown in FIG. 4 and in Table 1. Surface 54 has a vertex curvature corresponding to the base curve in the vicinity of optical axis A, the same as in lens 30. However, the curvature toward peripheral edge from the optical axis along the meridional line decreases (radius of curvature increases). As a result, surface 54 protrudes frontward (objectwise) from arc 60. On the other hand, the second longitudinal direction of second surface 56 of the present Working Example is also an aspherical surface. The aspherical shape of second surface 56 of lens 50 of the present Working Example is specified by curvature differential Z shown in Fig. 7 and in Table 2. Also, second surface 56 along the second longitudinal direction, unlike lens 30, has a vertex curvature in the vicinity of optical axis A, but the curvature from the optical axis along the meridional line toward peripheral edge 52 decreases (i.e., the radius of curvature increases).

As a result second surface 56 along the second longitudinal direction protrudes frontward (objectwise) of arc 62 having a vertex curvature. Furthermore, second surface 56 along the first longitudinal direction is formed in an arc shape, the same as in lens 30.

Thus, the base curve of first surface 54 in lens 50 of the present Working Example is made weaker than that of lens 10 and is aspherized. Also the second longitudinal direction of second surface 56 is also aspherical surface. Consequently, as in lens 30, the lens center thickness and total height in the H-direction and V-direction in lens 50 are greatly reduced, thus improving the external appearance of the lens. Moreover, since an aspherized toric surface is employed in second surface 56, the total height in the V-direction is smaller than in lens 30.

With reference now to FIGS. 8a and 8b, it can be seen that astigmatism in the H-direction and astigmatism in the V-direction are both nearly completely corrected. This indicates that the curve in the H-direction and the curve in the V-direction of lens 50 of the present Working Example axe both substantially optimal curves.

In lens 50 of the present Working Example, the lens center thickness is thinner and the protrusion of the convex surface at the center of the lens is smaller as compared with lens 10. In other words, the external appearance is improved and a thinner lens is realized. In addition, the base curve of first surface 54 is weakened and aspherized, and an aspherized toric surface is employed in second surface 56. Consequently, the optical performance along each of the longitudinal directions is extremely satisfactory, and there is no large drop in optical performance along each longitudinal direction, even if the astigmatism power increases.

As described above, Working Example 1 of the present invention weakens and aspherizes the base curve of the first surface. However, by employing the aforementioned special aspherical surface shapes in the first surface and in the second surface to correct astigmatism generated by weakening the base curve, an aspherical ophthalmic lens can be realized that has a desirable external appearance while having a superior optical performance.

Furthermore, in the present invention, to reliably realize the coexistence of a sufficient optical performance across the entire angle of the field of vision as well as the avoidance of an undesirable external appearance, it is preferable that the specific value of curvature differential Z in the objectwise surface and eyewise surface satisfy the following condition (A).

$$(n - 1) \times h \times \rho o < |Z| < (n - 1) \times h \times \rho o \times 1000 \qquad (A)$$

wherein ρo is the curvature (unit: $m^{-1}$) of the optical center of the given surface, n is the refractive index of the optical material that forms the ophthalmic lens, and h is the distance (unit: m) along the meridional line from the optical center of the lens.

In Working Example 1 described above, only the surface along one longitude of second surface 56 is aspherized. However, surface 56 along both longitudes may be aspherized. Also, second surface 56 is an aspherized toric. However, second surface 56 can also be formed in a rotationally symmetric aspherical shape if a prescription for astigmatism is not required. Furthermore, the present invention can also be applied to a progressive power lens by forming second surface 56 in an aspherized progressive power surface shape.

## Comparative Example 3

With reference now to FIGS. 9a-c, ophthalmic lens 70 is a third Comparative Example and comprising a first surface 76 that is spherical and a second surface 80 that is toric. Surfaces 76 and 80 are arranged along optical axis A. Lens 70 has a spherical power of -5.0D, a base curve of 3.0D) and an astigmatism power of -2D, and implements the prior art in a design at infinity. The refractive power in the H-direction is -5D and the refractive power in the V-direction is -7D.

The radius of curvature of first surface 76 is 166.666 mm (corresponding to a base curve of 3D). The radius of curvature of the first longitude of second surface 80 is 62.430 mm. The radius of curvature of the second longitude of second surface 80 is 49.955 mm. In addition, the lens diameter LD is 80 mm, the refractive index of the lens is 1.50, and the center thickness of the lens is 1.5 mm. The lens edge thickness ED in the H-direction is 11.1 mm, and total height TH in the H-direction is 16.0 mm. Furthermore, the lens edge thickness ED in the V-direction is 16.7 mm, and total height TH in the V-direction is 21.5 mm.

With reference now to FIGS. 10a and 10b, the astigmatism in the H-direction (FIG. 10a) is comparatively satisfactorily corrected, while the astigmatism in the V-direction (FIG. 10b) precipitously increases as the angle of the field of vision increases. Thus, although the curve in the H-direction is comparatively close to the optically optimal curve, the curve in the V-direction deviates greatly from the optically optimal curve. This trend increases as the astigmatism power increases.

As described above, as the power of lens 70 increases, the lens edge thickness increases, the curvature of the second surface strengthens, and the projection of the lens peripheral edge increases. Consequently, the external appearance of the lens degrades.

In addition, in lens 70, the optical performance along one longitudinal direction (H-direction) is satisfactory to some extent, However, the optical performance along the V-direction deteriorates as the angle of the field of vision increases. Moreover, since optical performance along each longitudinal direction decreases remarkably as the astigmatism power increases, patients requiring a prescription for astigmatism are not sufficiently taken into consideration.

## Comparative Example 4

With reference now to FIGS. 11a-11c, ophthalmic lens 90 is a fourth Comparative Example. In lens 90, second surface 80 is toric, the same as lens 70 of Comparative Example 3. However, unlike lens 70, first surface 76 is aspherical wherein the base curve is made lower than in lens 70.

Lens 90 has a spherical power of -5.0D, a base curve of 1.5D and an astigmatism power of -2D, and implements the prior art in a design at infinity. Lens 90 is the same as lens 70 (FIG. 9), except that the former includes an arc 94 having a curvature corresponding to the base curve. The first surface 76 is an aspherical surface. Furthermore, as in lens 70, the refractive power of lens 90 in the H-direction is -5D, and the refractive power in the V-direction is -7D.

The radius of curvature of first surface 76 is 333.333 mm (corresponding to a base curve of 1.5D). The radius of curvature of the first longitude of second surface 80 is 76.896 mm. The radius of curvature of the second longitude of second surface 80 is 58.808 mm. In addition, lens diameter LD is 80 mm, the refractive index of the lens is 1.50, and the lens center thickness is 1.5 mm. Furthermore, lens edge thickness ED in the H-direction is 9.7 mm, and total height TH in the H-direction is 12.7 mm, the lens edge thickness ED in the V-direction is 14.2 mm, and total height TH in the V-direction is 17.2 mm.

FIG. 12 shows the change in the difference between the curvature $\rho m$ (unit: m$^{-1}$) in the meridional direction and the curvature $\rho s$ (unit m$^{-1}$) in the sagittal direction, namely the change in curvature differential $Z = \rho m - \rho s$, of the aspherical surface of first surface 76 of lens 90.

Table 3 below sets forth the data corresponding to FIG. 12, wherein the precise values of curvature differential Z are shown corresponding to specific values of curvature $\rho m$ in the meridional direction, curvature $\rho s$ in the sagittal direction, and distance h. Referring to FIG. 12 and. Table 3, the value of curvature differential Z increases monotonically in the range up to a distance of approximately 20 mm from optical axis A along the meridional line, and decreases monotonically up to the peripheral edge along the meridional line outside of that range.

TABLE 3

| Curvature Differential Z Values for Comparative Example 4 | | | |
|---|---|---|---|
| h | ρm | ρs | Z |
| 0.0 | 3.000 | 3.000 | 0.000 |
| 5.0 | 3.168 | 3.057 | 0.111 |
| 10.0 | 3.594 | 3.212 | 0.382 |
| 15.0 | 4.082 | 3.422 | 0.660 |
| 20.0 | 4.435 | 3.635 | 0.800 |
| 25.0 | 4.565 | 3.812 | 0.753 |
| 30.0 | 4.495 | 3.934 | 0.562 |
| 35.0 | 4.223 | 3.998 | 0.225 |
| 40.0 | 3.889 | 4.000 | -0.112 |

First surface 76 of lens 90 has a vertex curvature corresponding to the base curves in the vicinity of optical axis A. However, the curvature toward the peripheral edge of lens 90 from the optical axis along the meridional line increases (i.e., the radius of curvature decreases). As a result first surface 76 does not protrude frontward (objectwise) from arc 94 having a curvature corresponding to the base curve, and then falls back rearward (eyewise) to some extent more than arc 94 at the peripheral edge. Thus, in lens 90, the base curve of first surface 76 is weakened (lowered) more than in lens 70 (FIG. 9a) and is aspherized. Thus, the lens edge thickness and total height in the H-direction and V-direction are greatly decreased as compared with lens 70, thus improving the external appearance of the lens.

Referring now to FIGS. 13a and 13b, though astigmatism in the H-direction is nearly completely corrected, astigmatism in the V-direction precipitously increases as the angle of the field of vision increases. Thus, although the curve in the H-direction is substantially the optically optimal curve, the curve in the V-direction deviates greatly from the optically optimal curve. This tend increases as the astigmatism power increases.

In the ophthalmic lens 90, as described above the lens edge thickness is thinner and the projection of the lens peripheral edge is also reduced, as compared with lens 70. In other words, by weakening the base curve and aspherizing first surface 76, the external appearance of lens 90 improves and a thinner lens is realized.

Since second surface 80 of lens 90 employs a conventional toric surface, the optical performance along one longitudinal direction (H-direction) is extremely satisfactory. However, the optical performance along the other longitudinal direction (V-direction) deteriorates as the angle of the field of vision increases. Moreover, as the astigmatism power increases, the optical performance along the V-direction decreases remarkably. In other words, it has the disadvantage that patients requiring a prescription for astigmatism are still not taken sufficiently into consideration.

**Working Example 2**

With reference now to FIGS. 14a-14c, ophthalmic lens 110 represents a second Working Example (Working Example 2) of the present invention and comprises a peripheral edge 112, a first surface 114 and a second surface 116. First surface 114 is aspherical with the base curve made lower than lens 70 (FIG. 9a), i.e., as in lens 90 (FIG. 11a). First surface 114 is the same configuration as first surface 76 in lens 90 (Comparative Example 4). Nevertheless, unlike lenses 70 and 90, in lens 110, second surface 116 is toric, aspherized along the second longitudinal direction (i.e., the vertical direction in FIG. 14a).

Lens 110 of the present Working Example has a spherical power of -5.0D, a base curve of 1.5D and an astigmatism power of -2D, and implements the present invention for a design at infinity. Lens 110 also includes an arc 118 having a curvature corresponding to the base curve, and an arc 120 having the vertex curvature of the second longitude of second surface 116 (on-axis curvature). Furthermore, as in lenses 70 and 90, the refractive power in the H-direction is -5D, and the refractive power in the V-direction is -7D.

The vertex radius of curvature of first surface 114 is 333.333 mm (corresponding to a base curve of 1.5D). The radius of curvature of the first longitude of second surface 116 is 76.896 mm. The vertex radius of curvature (on-axis curvature) of the second longitude second surface 116 is 58.808 mm. The lens diameter LD is 80 mm, the refractive index of the lens is 1.50, and the lens center thickness is 1.5 mm. Furthermore, lens edge thickness ED in the H-direction is 9.7 mm, and total height TH in the H-direction is 12.7 mm, the lens edge thickness ED in the V-direction is 15.2 mm, and total height TH in the V-direction is 19.1 mm.

FIG. 15 shows the change in the difference between the curvature $\rho m$ (unit: $m^{-1}$) in the meridional direction and the curvature $\rho s$ (unit: $m^{-1}$) in the sagittal direction, namely the change in $Z = \rho m - \rho s$, of second surface 116.

Table 4 below sets forth the data corresponding to FIG. 15, wherein the precise values of curvature differential Z are shown corresponding to specific values of curvature $\rho m$ in the meridional direction, curvature $\rho s$ in the sagittal direction, and distance h. Referring to FIG. 15 and Table 4, the value of curvature differential Z increases monotonically along the meridional line from optical axis A up to peripheral edge 112.

TABLE 4

| Curvature Differential Z Values for Working Example 2 | | | |
|---|---|---|---|
| h | $\rho m$ | $\rho s$ | Z |
| 0.0 | 17.000 | 17.000 | 0.000 |
| 5.0 | 17.002 | 17.003 | -0.001 |
| 10.0 | 17.033 | 17.005 | 0.028 |
| 15.0 | 17.205 | 17.038 | 0.167 |
| 20.0 | 17.585 | 17.122 | 0.463 |
| 25.0 | 18.305 | 17.279 | 1.026 |
| 30.0 | 19.815 | 17.560 | 2.255 |
| 35.0 | 22.624 | 18.068 | 4.556 |
| 40.0 | 24.975 | 18.816 | 6.159 |

The aspherical surface shape of first surface 114 of lens 110 in the present Working Example is specified by curvature differential Z shown in FIG. 12 and in Table 3. Although surface 114 has a vertex curvature corresponding to the base curve in the vicinity of optical axis A, the same as in lens 90, the curvature toward peripheral edge 112 from the optical axis along the meridional line increases (i.e., the radius of curvature decreases). As a result, surface 114 does not protrude frontward (objectwise) from arc 118, and falls back rearward (eyewise) to some extent more than arc 118 at the peripheral edge. On the other hand, the second longitudinal direction of second surface 116 is an aspherical surface. Also, second surface 116 along the second longitudinal direction, unlike lens 90, has a vertex curvature in the vicinity of optical axis A, but the curvature from the optical axis along the meridional line toward peripheral edge 112 increases (i.e., the radius of curvature decreases). As a result, second surface 116 along the second longitudinal direction of second surface 116 does not protrude frontward (objectwise) from arc 120, and also falls back rearward (eyewise) to some extent more than arc 118 at peripheral edge 112. Furthermore, second surface 116 along the first longitudinal direction is formed in an arc shape, the same as in lens 90.

Thus, by weakening the base curve and aspherizing first surface 114 in lens 110 more so than in lens 70, the lens edge thickness and total height in the H-direction and V-direction are greatly reduced as compared with lens 70. This improves the external appearance of lens 110. However, since the second longitudinal direction, namely the V-direction, of second surface 116 is an aspherical surface, the edge thickness and total height in the V-direction is slightly larger than that of lens 90.

With reference now to FIGS. 16a and 16b, it can be seen that astigmatism in the H-direction (FIG. 16a) and astigmatism in the V-direction (FIG. 16b) are both nearly completely corrected. This indicates that the curve in the H-direction and the curve in the V-direction in lens 110 of the present Working Example are both substantially optimal curves.

In lens 110 of the present Working Example, the lens edge thickness is thinner and the projection of the lens peripheral edge is reduced as compared to that of lens 70. In other words, the external appearance is improved and a thinner lens is realized, substantially the same as in lens 90. In addition, in lens 110, the base curve of first surface 114 is weakened and aspherized, and an aspherized toric surface is employed in second surface 116.

Consequently, the optical performance along each of the longitudinal directions is extremely satisfactory, and there is no large drop in optical performance along each longitudinal direction even if the astigmatism power increases.

Furthermore, in Working Example 2, the value of curvature differential Z in the second longitudinal direction of the second surface, as shown in FIG. 15, is substantially the same along the meridional line in the range of a distance of 0 to 5 mm from optical axis A, and increases monotonically along the meridional line in the range of a distance of 5 mm from optical axis A to the peripheral edge. Nevertheless, if it is desired to reduce the lens edge thickness even though optical performance is somewhat sacrificed in lens 110, the value of curvature differential Z should be set so that it switches from increasing to decreasing. Specifically, the design concept may be one in which, for example, sufficient optical performance is maintained in the range of up to a distance of approximately 20 mm outward from optical axis A along the meridional line and optical performance outside of this range is not especially an issue. In this case, the value of curvature differential Z should be set so that it is substantially the same along the meridional line in the range of a distance of 0 to 5 mm from optical axis A, and increases along the meridional line in the range of a distance of 5 to 20 mm from optical axis A, and then decreases up to the peripheral edge along the meridional line outside of that range.

In the present invention, to reconcile sufficient optical performance across the entire angle of the field of vision while avoiding an undesirable external appearance, it can be seen that the curvature differential Z must be substantially the same along the meridional line in the range of a distance of 0 to 5 mm from the optical center (optical axis A) of the lens, and increase monotonically along the meridional line in the range of a distance of 5 to 20 mm from the optical center of the lens.

Furthermore, in the present invention, to reliably realize the coexistence of a sufficient optical performance across the entire angle of the field of vision as well as the avoidance of an undesirable external appearance, it is preferable that the specific value of curvature differential Z in the objectwise surface and eyewise surface satisfy the following condition (A).

$$(n - 1) \times h \times \rho o < |Z| < (n - 1) \times h \times \rho o \times 1000 \qquad (A)$$

wherein $\rho o$ is the curvature (unit: $m^{-1}$) of the optical center of the given surface, n is the refractive index of the optical material that forms the ophthalmic lens, and h is the distance (unit: m) along the meridional line from the optical center of the lens.

In Working Example 2 described above, only the surface along one longitude of second surface 116 is aspherized However, surface 116 along both longitudes may be aspherized. Also, second surface 116 is an aspherized toric. However, second surface 116 can also be formed in a rotationally symmetric aspherical shape if a prescription for astigmatism is not required. Furthermore, the present invention can also be applied to a progressive power lens by forming second surface 116 in an aspherized progressive power surface shape.

As described above, a first aspect of the present invention is a positive ophthalmic lens for the correction of hypermetropia, having a superior optical performance, a thin lens center thickness and good appearance, even for patients requiring a prescription for astigmatism.

Also as described above, a second aspect of the present invention is a negative ophthalmic lens for the correction of myopia, having a superior optical performance, a thin lens edge thickness and good appearance, even for patients requiring a prescription for astigmatism.

According to the present invention as explained above, by weakening the base curve and making the first surface and second surface a special aspherical surface shape, an ophthalmic lens can be realized having superior optical performance and an aesthetically pleasing appearance, For the positive ophthalmic lens of the present invention, a thin lens center thickness can be obtained, while for the negative ophthalmic lens of the present invention, a thin lens edge thickness can be obtained. Furthermore, by forming the ophthalmic lens using an optical material having a high refractive index, the effect of the present invention can be further satisfactorily realized.

While the present invention has been described in connection with preferred embodiments and Working Examples, it will be understood that it is not so limited. On the contrary, it is intended to cover all alternatives, modifications and equivalents as may be included within the spirit and scope of the invention as defined in the appended claims.

## Claims

1.    An aspherical ophthalmic lens for assisting the eye in imaging an object, the lens having positive power, an optical center and a meridional line, and comprising:

    a) an objectwise first aspherical surface with a first meridional curvature and a first sagittal curvature ;
    b) an eyewise second aspheric surface with a second meridional curvature and a second sagittal curvature; and
    c) wherein said first and second meridional curvatures are given as $\rho m$, said first and second sagittal curvatures are given as $\rho s$, and a curvature differential Z between said curvature $\rho m$ and said curvature $\rho s$ is given

by Z = ρm - ρs, wherein said curvature differential Z monotonically decreases in a range from the optical center to a distance of at least 20 mm along the meridional line.

2. An aspherical ophthalmic lens according to claim 1, further including a peripheral edge, wherein said curvature differential Z decreases monotonically along the meridional line outside of said range, and then increases outward toward said peripheral edge.

3. An aspherical ophthalmic lens for assisting the eye in imaging an object, the lens having negative power, an optical center and a meridional line, end comprising:

   a) an objectwise first aspherical surface with a first meridional curvature and a first sagittal curvature;
   b) an eyewise second aspheric surface with a second meridional curvature and a second sagittal curvature; and
   c) wherein said first and second meridional curvatures are given as ρm, said first and second sagittal curvatures are given as ρs, and a curvature differential Z between said curvature ρm and said curvature ρs is given by Z = ρm - ρs, wherein said curvature differential Z monotonically increases in the range of a distance of at least 5 to 20 mm from the optical center along the meridional line.

4. An aspherical ophthalmic lens according to claim 1 or 3, wherein said objectwise first aspherical surface is rotationally symmetric, said eyewise second aspherical surface is toric having two longitudes, and wherein said second surface along at least one of said two longitudes is aspherical.

5. An aspherical ophthalmic lens according to claim 1 or 3, wherein both said objectwise first aspherical surface and said eyewise second aspherical surface are rotationally symmetric.

6. An aspherical ophthalmic lens according to any of claims 3 to 5, further including a peripheral edge, wherein said curvature differential Z increases monotonically from the optical center to said peripheral edge along the meridional line.

7. An aspherical ophthalmic lens according to claim 3, further including a peripheral edge, wherein said curvature differential Z increases monotonically along the meridional line outside of said range and then decreases monotonically outward toward said peripheral edge.

8. An aspherical ophthalmic lens according to any of claims 1, 3, 4 and 5, wherein said curvature differential Z for said objectwise first aspherical surface and said eyewise second aspherical surface satisfies the following condition:

$$(n - 1) \times h \times \rho o < |Z| < (n - 1) \times h \times \rho o \times 1000$$

wherein ρo is a surface curvature of at optical center in units of inverse meters, n is a refractive index of an optical material forming the ophthalmic lens, and h is a distance in units of meters along the meridional line extending outwardly from the optical center.

9. An aspherical ophthalmic lens according to any of claims 1, 4 and 5 including a peripheral edge, wherein said curvature differential Z decreases monotonically from the optical center to said peripheral edge along the meridional line.

d=8.0
TH=17.2

16 — 20

A — d

TH

**FIG. 1b**
**PRIOR ART**

V  +3D  10

A

LD

H  +5D

**FIG. 1a**
**PRIOR ART**

20

d

A  16

d=8.0
TH=14.3

**FIG. 1C**
**PRIOR ART**

55°
50°
40°
30°
20°
10°

−1D  1D

**FIG. 2a**
**PRIOR ART**

55°
50°
40°
30°
20°
10°

−1D  1D

**FIG. 2b**
**PRIOR ART**

d=6.4
TH=10.3

40

16 — 20

d

A

TH

FIG. 3b
PRIOR ART

V +3D

30

A

LD

H +5D

FIG. 3a
PRIOR ART

20

d

d=6.4
TH=7.8

16 40

A

FIG. 3C
PRIOR ART

h(mm)

35

30

25

20

15

10

5

0   -1   -2   -3   Z(m⁻¹)

FIG. 4
PRIOR ART

EP 0 964 285 A1

FIG. 5a
PRIOR ART

FIG. 5b
PRIOR ART

EP 0 964 285 A1

d=6.4
TH=9.7

FIG. 6b

V +3D

H +5D

FIG. 6a

56
d=6.4
TH=7.8

FIG. 6C

h(mm)

Z(m⁻¹)

FIG. 7

EP 0 964 285 A1

FIG. 8a

FIG. 8b

EP 0 964 285 A1

19

ED=16.7
TH=21.5

76  80

A

ED
TH

**FIG. 9b**
PRIOR ART

V  −7D        70

A

LD              H  −5D

**FIG. 9a**
PRIOR ART

80        ED=11.1
                TH=16.0

A      76

**FIG. 9c**
PRIOR ART

55°
50°
40°
30°
20°
10°

−1D                    1D
**FIG. 10a**
PRIOR ART

55°
50°
40°
30°
20°
10°

−1D                    1D
**FIG. 10b**
PRIOR ART

ED=14.2
TH=17.2

FIG. 11b
PRIOR ART

V −7D

90

LD

H −5D

A

FIG. 11a
PRIOR ART

80

ED=9.7
TH=12.7

76  A  94

FIG. 11C
PRIOR ART

Z (m⁻¹)

$Z (m^{-1})$

FIG. 12
PRIOR ART

FIG. 13a
PRIOR ART

FIG. 13b
PRIOR ART

ED=15.2
TH=19.1

118 120

114 116

A

112

ED

TH

FIG. 14b

V −7D 110

112

LD A H −5D

FIG. 14a

116

112

ED=9.7
TH=12.7

114 A 118

FIG. 14C

Z(m⁻¹)

$Z(m^{-1})$

0.6
0.5
0.4
0.3
0.2
0.1
0
−0.1

5    10    15    20    25    30    35    40

h(mm)

$h(mm)$

FIG. 15

55°
50°
40°
30°
20°
10°

1D

-1D

FIG. 16a

55°
50°
40°
30°
20°
10°

1D

-1D

FIG. 16b

**European Patent Office**

**EUROPEAN SEARCH REPORT**

Application Number

EP 99 11 1333

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DE 195 40 186 A (RODENSTOCK OPTIK G) 30 April 1997 (1997-04-30) * page 2, line 29 – page 3, line 52 * | 1-9 | G02C7/02 |
| Y | US 5 610 670 A (UENO YASUNORI) 11 March 1997 (1997-03-11) * abstract; claims * | 1,2,4,5, 8,9 | |
| Y | US 5 550 600 A (UENO YASUNORI) 27 August 1996 (1996-08-27) * abstract; claims * | 3-9 | |
| A | US 5 235 357 A (WINTHROP JOHN T ET AL) 10 August 1993 (1993-08-10) * abstract; claims * | 1,3 | |
| A | EP 0 379 976 A (SEIKO EPSON CORP) 1 August 1990 (1990-08-01) * claims * | 1,2 | |
| A | US 5 353 072 A (TEJIMA YASUYUKI ET AL) 4 October 1994 (1994-10-04) * claims * | 3-5 | TECHNICAL FIELDS SEARCHED (Int.Cl.6) G02C |
| P,A | EP 0 886 166 A (HOYA CORP) 23 December 1998 (1998-12-23) * abstract * | 1,3 | |

The present search report has been drawn up for all claims

| Place of search | Date of completion of the search | Examiner |
|---|---|---|
| THE HAGUE | 9 September 1999 | CALLEWAERT, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 99 11 1333

This annex lists the patent family members relating to the patent documents cited in the above–mentioned European search report.
The members are as contained in the European Patent Office EDP file on
The European Patent Office is in no way liable for these particulars which are merely given for the purpose of information.

09–09–1999

| Patent document cited in search report | | Publication date | Patent family member(s) | | Publication date |
|---|---|---|---|---|---|
| DE 19540186 | A | 30–04–1997 | AU | 698645 B | 05–11–1998 |
| | | | AU | 1765197 A | 15–05–1997 |
| | | | WO | 9715857 A | 01–05–1997 |
| | | | EP | 0800662 A | 15–10–1997 |
| | | | JP | 11502323 T | 23–02–1999 |
| US 5610670 | A | 11–03–1997 | JP | 8005967 A | 12–01–1996 |
| US 5550600 | A | 27–08–1996 | JP | 8005966 A | 12–01–1996 |
| US 5235357 | A | 10–08–1993 | NONE | | |
| EP 0379976 | A | 01–08–1990 | DE | 69014656 D | 19–01–1995 |
| | | | DE | 69014656 T | 18–05–1995 |
| | | | JP | 2289819 A | 29–11–1990 |
| | | | US | 5050980 A | 24–09–1991 |
| US 5353072 | A | 04–10–1994 | JP | 5215994 A | 27–08–1993 |
| | | | DE | 4302526 A | 05–08–1993 |
| EP 0886166 | A | 23–12–1998 | AU | 7193798 A | 24–12–1998 |
| | | | JP | 11072754 A | 16–03–1999 |

EPO FORM P0459

For more details about this annex : see Official Journal of the European Patent Office, No. 12/82